# FASCICULE DE BREVET EUROPEEN

(11) **EP 0 703 883 B1**
(45) Date de publication et mention de la délivrance du brevet: **02.06.1999**
(21) Numéro de dépôt: 95912295.3
(22) Date de dépôt: 10.03.1995
(51) Int. Cl.: C04B 41/85, C23C 4/06, C23C 26/00, C23C 4/18, C23C 24/10

(54) **PROCEDE POUR LA PROTECTION CONTRE L'OXYDATION DE PRODUITS EN MATERIAU REFRACTAIRE ET PRODUITS AINSI PROTEGES**
VERFAHREN ZUM OXYDATIONSSCHUTZ VON PRODUKTEN AUS FEUERFESTEM MATERIAL UND SO GESCHÜTZTE PRODUKTE
METHOD FOR PROTECTING PRODUCTS MADE OF A REFRACTORY MATERIAL AGAINST OXIDATION, AND RESULTING PROTECTED PRODUCTS

(30) Priorité: 10.03.1994 RU 94008267
(43) Date de publication de la demande: 03.04.1996
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: TERENTIEVA, Valentina Sergeevna, Moscou, 125512 (RU); BOGACHKOVA, Olga Petrovna, Moscou, 125353 (RU); GORIATCHEVA, Elena Valentinovna, Moscou, 125047 (RU)
(74) Mandataire: Joly, Jean-Jacques
(86) Numéro de dépôt international: FR9500279
(87) Numéro de publication internationale: WO9524364

(56) Documents cités:
- WO-A-93/20026
- FR-A- 2 684 986
- US-A- 4 503 085
- RUSSIAN METALLURGY, no. 4, 1982 pages 78-82, BELOV A. F. & AL. 'Physico-chemical fundamentals of the formation of heat-resistant silicide coatings on niobium and its alloys'
- INORGANIC MATERIALS, vol. 10, no. 5, Mai 1974 pages 879-881, V. S. TERENT'EVA & E. V. VASIL'EVA 'Structure, phase composition, and heat resistance of alloys of the system Si- Ti- Mo'
- REVUE DE PHYSIQUE APPLIQUEE, vol. 5, no. 3, 1970 PARIS FR, pages 573-595, STECHER P. & AL. 'Protection du niobium contre l'oxydation'
- DATABASE WPI Section Ch, Week 9130 Derwent Publications Ltd., London, GB; Class M13, AN 91-220681 & SU,A,1 588 801 ( BELORUSSIAN POLY) , 30 Août 1990
- JOURNAL OF THE LESS-COMMON METALS, vol. 81, 1981 pages 249-260, TUOMINEN S. M. & DAHL J. M. 'Cyclic oxidation testing of molybdenum protected by silicides coatings'

## Description

La présente invention concerne la protection contre l'oxydation de produits en matériau réfractaire.

Par matériaux réfractaires, on entend ici notamment les métaux ou alliages métalliques réfractaires, tels que des alliages à base de niobium ou encore à base de molybdène, de tungstène et/ou de tantale, ou les matériaux composites réfractaires, tels que les matériaux composites carbone-carbone ou les matériaux composites à matrice céramique par exemple les matériaux composites carbone-SiC (carbure de silicium). Ces matériaux réfractaires sont utilisés notamment dans l'industrie aéronautique et spatiale pour réaliser des pièces soumises en service à des températures élevées comme des pièces de moteurs aéronautiques ou des éléments de carénages aérodynamiques (véhicules spatiaux).

Un inconvénient grave commun aux matériaux réfractaires évoqués ci-dessus est leur faible résistance à l'oxydation, même exposés à des températures moyennes. Cela limite considérablement la possibilité de les utiliser en milieu oxydant à température élevée en régime statique et l'exclut pratiquement en régime aérodynamique si une protection contre l'oxydation n'est pas prévue.

Il existe un état de la technique très abondant en matière de protection contre l'oxydation de matériaux réfractaires, en particulier pour les matériaux composites contenant du carbone. Par matériau composite contenant du carbone, on entend ici un matériau composite dans lequel le carbone est présent dans des éléments de renfort, par exemple sous forme de fibres de carbone, ou dans la matrice, ou dans une couche intermédiaire ou interphase entre les éléments de renfort et la matrice.

Généralement, on forme sur la surface du matériau réfractaire un revêtement de protection comprenant une couche continue de céramique résistant à l'oxydation et constituant une barrière vis-à-vis de l'oxygène du milieu ambiant. La céramique utilisée peut être un carbure, un nitrure, un siliciure ou un oxyde. Toutefois, une telle couche céramique est inévitablement sujette à fissuration. Les microfissures apparaissent en effet en cours d'utilisation en raison des contraintes mécaniques subies et/ou de la différence entre les coefficients de dilatation thermique du matériau réfractaire et du revêtement de protection. Des défauts similaires peuvent même déjà apparaître au stade de l'élaboration de la couche céramique. Les fissures procurent à l'oxygène du milieu ambiant un accès direct au matériau réfractaire sous-jacent.

Pour résoudre ce problème, il est bien connu de réaliser le revêtement de sorte qu'il se forme une couche superficielle externe ayant des propriétés cicatrisantes ou d'adjoindre une telle couche à la couche céramique. Au cours de l'utilisation du matériau, les variations de contraintes thermiques et mécaniques se traduisent par des variations de la géométrie des fissures, notamment par rapprochement et écartement de leurs lèvres. Par couche cicatrisante, on entend ici une couche capable, dans les conditions d'utilisation du matériau réfractaire, de colmater, remplir ou étancher les fissures en suivant les mouvements des fissures et, ce, sans elle-même se fissurer. C'est pourquoi la couche cicatrisante est habituellement formée d'éléments qui constituent un verre, ou qui sont susceptibles de constituer un verre sous l'effet de l'oxydation, le verre étant sélectionné de manière à présenter un comportement visqueux à la température d'utilisation du matériau.

Ainsi, il est connu que l'utilisation d'un revêtement de protection à base de siliciures apporte une protection contre l'oxydation aux températures élevées en raison de la formation d'un film superficiel de base silice résultant de l'oxydation du silicium contenu dans le revêtement. En cours d'utilisation, le film de base silice s'auto-reconstitue en permanence dans la mesure où l'oxygène est apporté en quantité suffisante. La base silice a une fonction cicatrisante par son passage à l'état visqueux aux températures élevées. Il est toutefois apparu qu'en présence de flux thermiques à haute énergie et vitesse élevée, par exemple dans la chambre de combustion d'un réacteur hypersonique à flux d'air direct, la régénération du film de silice n'est pas toujours assez rapide. La présence de courants thermiques intenses localisés en particulier dans les zones de défauts de surface, au niveau d'arêtes vives, ainsi que dans les zones d'incidence des ondes de chocs, peut conduire à une destruction rapide du film d'oxyde superficiel et à une combustion du matériau réfractaire qui peut être auto-entretenue lorsque la réaction d'oxydation est fortement exothermique.

En outre, un film ou une couche de surface cicatrisante présente généralement une résistance à l'érosion plus faible que celle du revêtement céramique et présente le risque, à l'état visqueux, d'être éliminé par soufflage. Or, dans certaines applications, notamment pour des pièces de moteurs aéronautiques ou des éléments de carénage d'avions spatiaux, la surface du matériau est confrontée à un écoulement gazeux produisant cet effet de soufflage. Il en est ainsi que la couche superficielle cicatrisante soit produite et régénérée par oxydation de constituants du revêtement de protection ou soit déposée sous forme d'une couche additionnelle sur le revêtement céramique.

Afin de surmonter cette difficulté, il est proposé dans le document EP-A-0 550 305 de réaliser une protection antioxydation comprenant une phase céramique réfractaire telle qu'un carbure, nitrure, siliciure ou borure et une phase cicatrisante constituant deux réseaux interpénétrés. La protection est réalisée en déposant à la surface du produit un mélange d'une céramique réfractaire sous forme finement divisée, d'au moins un oxyde réfractaire également sous forme finement divisée et ayant des propriétés cicatrisantes par formation d'un verre, et d'un liant constitué par un polymère précurseur d'une céramique réfractaire. Le polymère permet, par sa réticulation préalable à sa transformation en céramique, de constituer un réseau tridimensionnel emprisonnant les charges de céramique réfractaire et celles d'oxyde(s) de la phase cicatrisante. Après transformation du polymère précurseur en céramique, un traitement thermique réalisé à une température supérieure à la température de fusion ou ramollissement de la phase cicatrisante permet aux charges de la phase cicatrisante de se lier entre elles. Il en résulte la formation d'une phase cicatrisante continue interpénétrée avec la phase céramique réfractaire et, par là même, mieux apte à résister à l'abrasion et au soufflage.

Toutefois, il est souhaitable, et c'est le but de la présente invention, d'améliorer encore les performances de la protection antioxydation, d'une part, pour autoriser l'utilisation de matériaux réfractaires à des températures très élevées, typiquement jusqu'à une température de surface du matériau de 1850° C au moins et, d'autre part, pour garantir la permanence de la fonction cicatrisante y compris dans des zones de surface qui, par leur configuration ou leur emplacement, sont exposées à des flux thermiques intenses ou à des écoulements gazeux à très grande vitesse.

Ce but est atteint, conformément à l'invention, grâce à un revêtement de protection contre l'oxydation comprenant une phase réfractaire qui présente une microstructure ramifiée formant une armature au sein de laquelle est répartie une phase cicatrisante,
la phase réfractaire formant l'armature étant formée principalement du disiliciure réfractaire mixte Ti_{(0,4-0,95)}Mo_{(0,6-0,05)}Si₂ et
la phase cicatrisante étant constituée par un eutectique qui est formé principalement de silicium non lié, du disiliciure mixte Ti_{(0,4-0,95)}Mo_{(0,6-0,05)}Si₂ et au moins du disiliciure TiSi₂.

La phase cicatrisante peut comporter en outre au moins un disiliciure MeSi₂, où Me est un métal des groupes 3 à 8 de la classification périodique des éléments (norme IUPAC).

Le revêtement de protection comprend en outre un film d'oxyde superficiel comprenant de la silice obtenue par oxydation du silicium et des siliciures contenus dans le revêtement. Le revêtement de protection peut encore être complété par une couche externe réfractaire. Celle-ci peut être une couche comprenant au moins un oxyde, telle qu'une couche de verre de silice, d'alumine, de zircone, ou encore une couche de céramique non-oxyde telle du carbure de silicium (SiC) ou du nitrure de silicium (Si₃N₄) obtenue par exemple par dépôt chimique en phase vapeur.

Ce sont les compositions particulières de l'armature du revêtement de protection et de l'eutectique réparti uniformément au sein de cette armature qui, en association avec la génération d'un film d'oxyde superficiel, confèrent au revêtement ses propriétés exceptionnelles, notamment sa capacité d'assurer une protection contre l'oxydation à des températures de surface pouvant atteindre au moins 1850°C et pour des configurations de pièces et des conditions d'utilisation les plus défavorables. Contribuent à ces performances les capacités d'autocicatrisation du revêtement qui sont apportées :
- d'une part, par le film d'oxyde superficiel autorégénéré constitué essentiellement de silice amorphe dopée par d'autres constituants du revêtement,
- d'autre part, par l'eutectique qui constitue un des éléments structuraux du revêtement et qui, du fait de leurs compositions respectives, présente une bonne adhésion vis-à-vis de l'autre constituant structural du revêtement formant l'armature ; incidemment, on notera que cette adhésion contribue à accroître la résistance à l'effet de soufflage, l'armature retenant efficacement l'eutectique lorsque la température dépasse le point de fusion de celui-ci.

L'armature du revêtement à base de siliciures reste homogène dans un large domaine de température et présente en outre une capacité à accumuler des éléments dopants, en particulier du niobium, du tungstène ou du tantale provenant du matériau réfractaire sous-jacent lorsque celui-ci comprend un alliage d'un de ces éléments.

L'eutectique, outre sa fonction de cicatrisation, permet d'accélérer la formation et la régénération du film d'oxyde superficiel à base de silice amorphe, notamment en facilitant la migration vers la surface du silicium ou d'autres éléments dopants entrant dans la composition du film d'oxyde. Parmi ces éléments dopants, le bore et l'yttrium contribuent à faciliter la formation d'un film superficiel uniforme ayant une capacité de protection améliorée. Le bore et l'yttrium peuvent être présents dans le revêtement sous forme de YSi₂, borure de titane et/ou borure d'yttrium.

Les performances de la protection antioxydation obtenue conformément à l'invention permettent d'envisager l'utilisation de matériaux réfractaires munis de cette protection dans des applications telles que les réacteurs hypersoniques et les engins aérospatiaux où les conditions d'exploitation peuvent être très sévères. Ainsi, sans nécessiter de systèmes de refroidissement complexes et coûteux, on peut réaliser des pièces de réacteurs hypersoniques ou parties de surface de chambre de réaction qui présentent des arêtes vives ou sont le siège de phénomènes thermiques intenses localisés. En outre, on peut aussi réaliser des éléments de carénage aérodynamique d'engins aérospatiaux, notamment d'avions spatiaux, qui sont soumis à des flux thermiques intenses, tels que les bords d'attaque d'ailes ou le nez.

Un autre avantage de l'invention est que le revêtement de protection contre l'oxydation peut aussi bien convenir à la protection d'alliages métalliques réfractaires, notamment des alliages de niobium, de molybdène, de tungstène, de tantale, des intermétalliques ou des alliages à dispersion d'oxydes qu'à la protection de matériaux composites réfractaires, notamment les matériaux composites contenant du carbone tels que les composites carbone-carbone ou carbone-SiC, ou à la protection "anti-inflammation" ou compatibilité oxygène de métaux tels que l'aluminium, le titane ou le nickel, ainsi que leurs alliages et leurs intermétalliques et alliages de type TiAl, Ti₃Al, TiAl₃, NiAl et Ni₃Al.

Un autre objet de l'invention est de fournir un procédé permettant la réalisation du revêtement de protection antioxydation défini plus haut.

Selon l'invention, un tel procédé comprend les étapes consistant à :
- préparer un mélange contenant des poudres ayant la composition suivante, en pourcentage en poids :
   Ti : 15 % à 40 %
   Mo : 5,0 % à 30 %
   Cr : 0 % à 8 %
   Y : 0 % à 1,5 %
   B : 0 % à 2,5 %
   Me : 0 % à 10 % où Me est au moins un métal, autre que Ti, des groupes 3 à 8 de la classification périodique des éléments.
   Si : complément à 100 %
- déposer le mélange à la surface du matériau à protéger ; et
- effectuer au moins un traitement thermique à une température au moins égale au point de fusion de l'eutectique du revêtement.
   Me est de préférence choisi parmi Mn, Fe, Co et Ni.

Le traitement thermique comprend une première étape sous vide permettant la formation du revêtement de protection recherché et l'adhésion de ce revêtement à la surface du matériau à protéger, et une deuxième étape en milieu oxydant pour permettre la formation d'un film d'oxyde à la surface du revêtement. La première étape est effectuée à une température égale ou supérieure au point de fusion de l'eutectique, généralement dans une plage allant de 1300°C à 1600°C environ. La deuxième étape est réalisée en milieu oxydant à une température située dans une plage allant de 1200°C à 1600°C environ, de préférence au moins 1300°C. Cette deuxième étape qui a pour objet une pré-oxydation n'est pas indispensable avant l'utilisation du matériau, puisqu'elle peut avoir lieu lors de la première mise en service.

Une couche externe réfractaire peut en outre être déposée à la surface du matériau muni du revêtement anti-oxydation. Cette couche externe peut être formée par au moins un oxyde réfractaire, tel que verre de silice, alumine, zircone, ou par une céramique non oxyde, telle que SiC ou Si₃N₄ obtenue par exemple par dépôt chimique en phase vapeur.

Une composition préférée, en pourcentage en poids, du mélange de poudres est la suivante :
Ti : environ 30 %
Mo : environ 10 %
Cr : environ 0,2 %
Y : environ 0,5 %
B : environ 2 %
Me : environ 7 %
Si : complément à 100 %,
composition dans laquelle Me est de préférence le fer.

Plusieurs techniques peuvent être utilisées pour déposer le mélange de poudres sur la surface du matériau réfractaire.

De préférence, le mélange de poudres est mis en suspension dans un liquide, par exemple de l'eau, éventuellement additionnée d'un agent dispersant tensio-actif et/ou d'un liant organique fugitif tel qu'un vernis cellulosique, d'un polymère du type alcool polyvinylique, etc, afin de permettre un dépôt par trempage, au pinceau ou par pulvérisation à l'air libre, cette technique présentant les avantages de la simplicité, de la rapidité et de faible coût.

Mais d'autres techniques de dépôt du mélange de poudres sont utilisables, comme le dépôt par projection supersonique froide, projection par explosion, ou projection thermique, notamment projection plasma.

L'épaisseur de la couche déposée est choisie en fonction de celle désirée pour le revêtement de protection.

D'une façon générale, cette dernière est supérieure à 10 µm et atteint de préférence au moins 60 à 100 µm selon la configuration de la surface du matériau (arête vive ou surface plane).

L'application de ce type de protection à des matériaux poreux inclut également la possibilité que cette protection ne soit pas limitée à la seule protection de la surface géométrique, mais également imprégne, remplisse toute ou partie de la porosité accessible des matériaux. Il en est ainsi par exemple pour les matériaux composites tels que les composites carbone-carbone, et les composites à matrice céramique qui présentent une porosité résiduelle, et les métaux poreux sous forme de mousses ou de fibres.

Deux exemples de mise en oeuvre de la présente invention seront maintenant décrits à titre indicatif mais non limitatif.

### Exemple 1

Des échantillons sous forme de disques de 20 mm de diamètre et 1,5 mm d'épaisseur sont réalisés en un matériau réfractaire formé d'un alliage de niobium et ayant la composition suivante (en pourcentage en poids) :
Mo : 4,6 %
Zr : 1,4 %
C : 0,12 %
O₂ : 0,02 %
H₂ : 0,05 %
Nb : complément à 100 %.

Une composition de revêtement est préparée sous forme d'un mélange de poudres à l'état finement divisé, la dimension moyenne des particules de poudres étant d'environ 10 µm. La composition, en pourcentage en poids, du mélange de poudres est la suivante :
Ti : 30 %
Mo : 10 %
Cr : 0,2 %
Y : 0,5 %
B : 2,0 %
Fe : 7 %
Si : complément à 100 %.

Le mélange de poudres est mis en suspension dans de l'eau, le rapport en poids entre les charges et l'eau étant 1/1, afin de réaliser un dépôt au pinceau sur la surface des échantillons. Après séchage à l'air pendant 40 min. il est procédé à un traitement thermique sous vide (environ 0,65 Pa) à une température de 1 420°C pendant 8 min. Ce traitement thermique permet d'obtenir le revêtement souhaité à base de siliciures avec une épaisseur sensiblement uniforme et une adhérence à la surface du matériau à protéger. L'épaisseur du revêtement est de 90 à 110 µm sur les différents échantillons.

Ensuite, un traitement d'oxydation à l'air libre est réalisé à une température de 1 300°C pendant 30 min, résultant dans la formation d'un film superficiel d'oxyde.

Les échantillons ainsi protégés sont soumis à des cycles thermiques avec choc thermique, chaque cycle comprenant une élévation de température de 20°C à 1600°C pendant 5 s, un refroidissement à 1300°C pendant 30s, un maintien à 1 300°C pendant 20 min et un refroidissement à l'air de 1 300°C à 20°C. Tous les échantillons sont soumis à 50 cycles.

Ensuite, les échantillons sont conservés dans un four à 1 300°C pendant 100 h sous air avec convection naturelle. La mesure de perte de poids de chaque échantillon révèle un taux d'oxydation de 4,6.10⁻² kg/m².h.

Les échantillons sont ensuite exposés à une température de 1 775°C pendant 2 h afin de vérifier leur caractère opérationnel à cette température. Aucun signe d'oxydation n'apparaît à la surface des échantillons.

Les échantillons sont aussi testés en étant placés dans un écoulement gazeux contenant les produits de combustion d'un combustible. La vitesse d'écoulement est de Mach 2,5, la température à la surface des échantillons est de 1 675°C et le rapport h/Cp est de 10 kg/m².s environ, h étant le coefficient de transfert de chaleur et Cp la chaleur massique. Aucun effet destructif n'est noté après 500 s, lorsque le flux gazeux est dirigé perpendiculairement à la surface plane des échantillons et après 60 s, lorsque le flux gazeux est dirigé sur une arête des échantillons. A titre de comparaison, des échantillons du même alliage de niobium non munis de revêtement de protection sont détruits en quelques secondes lors de ce test.

### Exemple 2

Des échantillons parallélépipédiques de dimensions 60 x 10 x 3 mm sont découpés dans une plaque de matériau composite carbone-carbone (C-C) ayant un renfort comprenant des couches superposées de tissu en carbone et une matrice en carbone. Les échantillons sont revêtus d'une mince couche de carbure de silicium (SiC) obtenu par exemple par dépôt chimique en phase vapeur.

Un mélange est préparé à partir de poudres à l'état finement divisé, la dimension moyenne des particules étant d'environ 10 µm. La composition, en pourcentage en poids, du mélange de poudres est la suivante :
Ti : 30 %
Mo : 10 %
Y : 0,5 %
B : 1,5 %
Fe : 7 %
Mn : 1,5 %
Si : complément à 100 %.

Le mélange de poudres est mis en suspension dans un liant à base d'éthylsilicate avec un rapport en poids entre les charges et le véhicule liquide de 1/1. La suspension est déposée au pinceau sur toutes les faces des échantillons.

Après séchage à l'air pendant 1 h, un traitement thermique est effectué sous vide (environ 0,013 Pa) à 1 440°C pendant 5 min. Un revêtement à base de siliciures épousant étroitement la surface du matériau composite et adhérant à celle-ci est alors obtenu, l'épaisseur du revêtement variant entre 85 et 115 µm.

Un traitement d'oxydation à l'air est ensuite effectué à une température de 1 300°C pendant 30 min pour former un film d'oxyde superficiel.

Des échantillons ainsi protégés sont testés par cyclage thermique sous flux d'air chauffé dans une torche à plasma à induction haut fréquence ("Plasmatron"). Les caractéristiques de la torche et les conditions d'essai sont les suivantes: vitesse d'écoulement du flux de 1 670 m/s, température du flux de 2 153°C, puissance de la torche de 35 kW, pression de flux de 38 à 90 Pa, pression à l'arrière de l'onde de choc de 0,2 MPa, nombre de Mach de 1,9, distance entre la tuyère et l'échantillon de 105 mm, aire de la zone chauffée sur l'échantillon de 78,5 mm², flux perpendiculaire à la surface principale de l'échantillon. Le cyclage thermique est effectué avec choc thermique conformément au régime suivant : 5 s de chauffage de la température ambiante à 1 700°C, 10s de palier, et refroidissement jusqu'à environ 125 à 225°C. Après 20 cycles, aucun échantillon testé n'est détruit. Le taux de perte de masse du revêtement mesuré est de 0,0009 kg/m².s pour l'ensemble de la durée des tests.

D'autres échantillons munis du revêtement de protection ont été testés sous flux d'air chaud chauffé dans le même dispositif de chauffage. Deux cycles d'essais successifs ont été réalisés dans les conditions respectives suivantes: vitesse d'écoulement du flux d'air de 90 et 95 m/s, enthalpie du flux de 5 900 et 6 200 kJ, température au point d'arrêt de 3 200°C et 3 350°C, rapport h/Cp de 0,62 et 0,66 kg/m².s, distance entre la tuyère et l'échantillon à tester de 60 et 75 mm, flux thermique sur paroi chaude de 2 420 et 2 680 kW/m², température du centre du point chaud à la surface de l'échantillon pendant le cycle d'essais de 1 780°C et 1 710°C, et paliers à 1 780°C de 53 s et à 1 710°C de 36 s. Aucune destruction d'échantillon n'est observée pendant les essais. A titre de comparaison, des essais similaires effectués sur des échantillons semblables en matériau composite carbone-carbone avec revêtement SiC, mais sans revêtement de protection conforme à l'invention ont amené la destruction systématique des échantillons.

Les exemples 1 et 2 ci-dessus témoignent de l'efficacité remarquable de la protection contre l'oxydation réalisée conformément à l'invention, et ce à des températures élevées, pour des configurations de pièces défavorables (arêtes vives) et dans des conditions très sévères (écoulement de flux gazeux corrosifs à vitesse élevée).

### Exemple 3

Des échantillons de matériau composite C-SiC en forme de disques de diamètre 25 mm et épaisseur 3 mm, sont élaborés à partir d'un renfort à base de fibres de carbone et d'une matrice SiC obtenue par infiltration chimique en phase vapeur.

Ces échantillons sont ensuite revêtus sur toutes leurs faces, par peinture à l'aide de la suspension décrite dans l'exemple 2 et traités thermiquement selon le même protocole à 1 440°C, pendant 5 minutes.

L'épaisseur du revêtement obtenu est d'environ 100 µm.

Ces échantillons sont placés perpendiculairement dans le flux gazeux d'une torche à plasma d'air dont les caractéristiques de fonctionnement sont :
- vitesse du gaz : Mach 4,5-5
- température : 7 000° K
- degré de dissociation : 0.8 %
- degré d'ionisation : 0,1 %.

Des échantillons protégés sont introduits dans le flux gazeux pendant une durée de 70 minutes au cours d'essais successifs dans lesquels la distance entre la torche et l'éprouvette est ajustée pour faire varier la température de surface de l'échantillon.

Après chaque essai, on mesure la variation relative Δm/m de la masse de l'échantillon (une valeur négative correspond à une oxydation du carbone) et donc le degré de protection apporté.

On obtient, pour les différentes températures de surface d'échantillon T et pressions P :
- à T = 1 100°C et P = 67 kPa : Δm/m = + 0,06 %
- à T = 1 44°C et P = 160 kPa : Δm/m = + 0,27 %
- à T = 1 500°C et P = 240 kPa : Δm/m = - 1,12 %

Ces résultats montrent l'efficacité de la protection soumise à haute température dans un flux gazeux à très grande vitesse. A titre de comparaison, le même matériau sans protection est détruit avant la fin du cycle de 70 minutes.

Une des caractéristiques particulières de ce revêtement placé dans de telles conditions est d'avoir une très faible catalycité Kw qui est de 2 m/s jusqu'à 1 200°C et ne dépasse pas 6 m/s à 1 600°C. En association avec une émissivité élevée (0,85 à 1 100°C), cela rend cette protection antioxydation particulièrement intéressante pour la protection de structures de rentrée dans les atmosphères des planètes.

### Exemple 4

Une éprouvette de traction de longueur 220 mm et de section utile 20 mm x 3,6 mm en matériau composite C-SiC est réalisée et protégée comme dans l'exemple 3.

Cette éprouvette est placée dans la torche à plasma d'air décrite dans l'exemple 3, de telle sorte que le fût de l'éprouvette soit chauffé d'une façon homogène, alors que, simultanément, on exerce sur l'éprouvette un effort de traction correspondant à une contrainte de 80 MPa. Après cinq tests de 20 minutes (soit 100 minutes) sous contrainte, à 1 350°C et sous une pression P = 160 kPa, l'éprouvette n'est pas rompue et sa variation de masse est négligeable.

A 1 500°C et sous une pression P = 386kPa, l'éprouvette n'est toujours pas rompue après une heure sous contrainte.

Cela démontre la capacité de la protection anti-oxydation à protéger un matériau réfractaire soumis à chaud, à des contraintes mécaniques élevées.

### Exemple 5

Des échantillons sous forme de disques de 20 mm de diamètre et 1,5 mm d'épaisseur sont réalisés en un matériau réfractaire formé d'un alliage de niobium ayant la composition suivante (en pourcentage en poids) :
Mo : 4,6 %
Zr : 1,4 %
C : 0,12 %
O₂ : 0,02 %
H₂ : 0,05 %
Nb : complément à 100 %

Une composition de revêtement est préparée sous forme d'un mélange de poudres à l'état finement divisé, la dimension moyenne des particules de poudres étant d'environ 10 µm. La composition, en pourcentage en poids, du mélange de poudres est la suivante :
Ti : 30 %
Mo : 10 %
Yb : 1 %
B : 2,0 %
Si : complément à 100 %.

Le mélange de poudre est mis en suspension dans l'eau, afin de réaliser un dépôt au pinceau, sur la surface des échantillons. Après séchage à l'air, pendant 40 minutes, il est procédé à un traitement thermique sous vide (environ 0,65 Pa) à une température de 1 420° C pendant 8 minutes.

L'épaisseur du revêtement est de 90 à 110 µm sur les différents échantillons.

Ensuite, un traitement d'oxydation à l'air libre est réalisé à une température de 1 300° C pendant 30 minutes, résulant dans la formation d'un film superficiel d'oxyde.

Des recuits de diffusion de une heure et 25 heures à 1 450°C ont été réalisés sous argon.

L'examen, avant et après recuits, des couches constituant le dépôt, montre une grande stabilité du revêtement.

Le recuit de diffusion affecte peu la composition des différentes couches du revêtement, quel que soit le temps de traitement.

Sur le même type d'échantillon, des essais d'oxydation isotherme à 1 450°C sont réalisés.

L'analyse thermogravimétrique montre le comportement supérieur de ce type de revêtement par rapport à des revêtements connus.

L'oxydation est lente et le régime est rapidement linéaire. Ainsi, la variation de masse est légèrement inférieure à 1 mg/cm² au bout de 10 heures.

### Exemple 6

Deux alliages sensibles à l'auto-inflammation, du fait d'une température d'inflammation basse et d'une chaleur de combustion élevée, sont testés. A cette fin, on réalise d'une part, des échantillons en alliage à base de niobium et, d'autre part, des échantillons en alliage à base de titane.

Les échantillons en alliage à base de niobium sont de même composition que dans l'exemple 1 et la préparation d'une couche de revêtement de l'ordre de 80 µm est identique : dépôt au pinceau puis traitements thermiques.

Les échantillons en alliage à base de titane correspondant à un alliage de dénomination TA6V sont revêtus d'une couche de la composition suivante :
Ti : 30 %
Mo : 10 %
Y : 0,3 %
B : 2,0 %
Cr : 4 %
Si : complément à 100 %.

Toutefois, le dépôt est réalisé selon deux techniques :
- dépôt avec pulvérisation par détonation, donnant une épaisseur de revêtement 40 à 60 µm,
- dépôt par projection supersonique froide, donnant une épaisseur de revêtement de l'ordre de 10 µm.

Il n'y a pas de traitement thermique ultérieur.

Dans tous les cas, les échantillons sont des disques de diamètre 13 mm et d'épaisseur 6 mm, revêtus sur une face.

Le test de compatibilité retenu est l'essai de compression adiabatique sous oxygène (O₂) haute pression selon la norme NF E 29-690.

Les conditions générales sont les suivantes :
- température initiale O₂ : 60° C
- pression maximale O₂ : 30 MPa
- nombre de cycles : 20.

Pour le lot d'échantillons en alliage à base de niobium et pour les deux lots d'échantillons en alliage à base de titane, aucune combustion n'a été constatée. Il faut souligner que la compression adiabatique rapide d'oxygène gazeux provoque un échauffement très important des éprouvettes, soit 1 420° C pour une pression finale de 30 MPa.

La température d'inflammation de l'alliage de titane non protégé, sous forte pression d'oxygène, est normalement inférieure à 600° C.

Le revêtement joue donc parfaitement un rôle protecteur contre le risque d'auto-inflammation.

### Exemple 7

On réalise une suspension aqueuse d'un mélange de poudres dont la composition (en pourcentage en poids) est
Ti : 30 %
Mo: 10 %
Cr : 0,2 %
Y : 0,5 %
B : 2,0 %
Fe : 7 %
Si : complément à 85 %.
Ce mélange est donc déficitaire de 15 % en silicium.

On prend une éprouvette de matériau composite C-SiC (renfort en fibres de carbone et matrice SiC) ayant une porosité de l'ordre de 10 %. Par un procédé d'imprégnation par trempage sous vide, on remplit la porosité et on revêt simultanément la surface du matériau avec cette composition, puis on étuve à 120°C pendant une demi heure pour éliminer l'eau.

Dans un four sous vide, on chauffe dans un creuset du silicium élémentaire à une température de 1 440°C. Le silicium est alors liquide.

On immerge par trempage l'éprouvette ainsi préparée dans le silicium liquide, le silicium liquide pénètre alors dans la porosité, finit de réagir avec la poudre présente et complète à 100 % la composition initiale.

On obtient alors un matériau composite protégé à la fois en surface et en volume par la composition globale telle que décrite dans l'exemple 2.

## Revendications

1. Produit en matériau réfractaire protégé contre l'oxydation par un revêtement formé au moins à la surface du matériau et comprenant une phase réfractaire interpénétrée avec une phase cicatrisante, caractérisé en ce que la phase réfractaire est formée principalement du siliciure réfractaire Ti_{(0,4-0,95)}Mo_{(0,6-0,05)}Si₂, et la phase réfractaire présente une microstructure ramifiée formant une armature au sein de laquelle est répartie la phase cicatrisante constituée par un eutectique qui est formé principalement de silicium non lié, de siliciure Ti_{(0,4-0,95)}Mo_{(0,6-0,05)}Si₂ et d'au moins le disiliciure TiSi₂.

2. Produit selon la revendication 1, caractérisé en ce que la phase cicatrisante comprend en outre au moins un disiliciure MeSi₂, outre TiSi₂, où Me est un métal des groupes 3 à 8 de la classification périodique des éléments.

3. Produit selon l'une quelconque des revendications 1 et 2, caractérisé en ce que le revêtement comprend en outre un film d'oxyde superficiel comprenant de la silice obtenue par oxydation de silicium contenu dans le revêtement.

4. Produit selon l'une quelconque des revendications 1 à 3, caractérisé en ce que Me est un métal choisi parmi Mn, Fe, Co, Ni.

5. Produit selon l'une quelconque des revendications 1 à 4, caractérisé en ce que le revêtement comprend en outre du bore et/ou de l'yttrium sous forme combinée.

6. Produit selon la revendication 5, caractérisé en ce que le revêtement comprend du disiliciure d'yttrium YSi₂.

7. Produit selon l'une quelconque des revendications 5 et 6, caractérisé en ce que le revêtement comprend du borure de titane et/ou du borure d'yttrium.

8. Produit selon l'une quelconque des revendications 1 à 7, caractérisé en ce que le matériau réfractaire est choisi parmi les alliages de niobium, de tantale, de molybdène, de tungstène, les intermétalliques et les alliages à dispersion d'oxydes.

9. Produit selon l'une quelconque des revendications 1 à 7, caractérisé en ce que le matériau réfractaire est choisi parmi l'aluminium, le titane, le nickel, leurs alliages et les intermétalliques et alliages du type TiAl, Ti₃Al, TiAl₃, NiAl, Ni₃Al, vis-à-vis desquels le revêtement a une fonction anti-inflammation.

10. Produit selon l'une quelconque des revendications 1 à 7, caractérisé en ce que le matériau réfractaire est un matériau composite contenant du carbone.

11. Produit selon l'une quelconque des revendications 1 à 7, caractérisé en ce que le matériau réfractaire est un matériau composite choisi parmi les matériaux composites carbone-carbone et carbone SiC.

12. Procédé pour l'obtention d'un produit en matériau réfractaire protégé contre l'oxydation selon l'une quelconque des revendications 1 à 11, comprenant les étapes consistant à :
- préparer un mélange contenant des poudres ayant la composition suivante, en pourcentage en poids :
Ti: 15 % à 40 %
Mo : 5,0 % à 30 %
Cr : 0 à 8 %
Y : 0 % à 1,5 %
B : 0 % à 2,5 %
Me : 0 % à 10 % où Me est au moins un métal, autre que Ti, des groupes 3 à 8 de la classification périodique des éléments.
Si : complément à 100 %
- déposer le mélange à la surface du matériau à protéger; et
- effectuer au moins un traitement thermique sous atmosphère neutre à une température au moins égale au point de fusion de l'eutectique formant la phase cicatrisante.

13. Procédé selon la revendication 12, caractérisé en ce que Me est choisi parmi Mn, Fe, Co, Ni.

14. Procédé selon l'une quelconque des revendications 12 et 13, caractérisé en ce que le traitement thermique comprend en outre une étape réalisée en milieu oxydant pour former un film d'oxyde à la surface du revêtement.

15. Procédé selon la revendication 14, caractérisé en ce qu'il comprend en outre le dépôt, à la surface du matériau muni de revêtement, d'une couche d'oxyde réfractaire.

16. Procédé selon la revendication 14, caractérisé en ce qu'il comprend en outre le dépôt, à la surface du matériau revêtu du revêtement, d'une couche de céramique non oxyde.

17. Procédé selon l'une quelconque des revendications 12 à 16, caractérisé en ce que la composition, en pourcentage en poids, du mélange de poudres est :
Ti : environ 30 %
Mo : environ 10 %
Cr : environ 0,2 %
Y : environ 0,5 %
B : environ 2 %
Me : environ 7 %
Si : complément à 100 %.

18. Procédé selon la revendication 17, caractérisé en ce que Me est le fer.

19. Procédé selon l'une quelconque des revendications 12 à 18 caractérisé en ce que le mélange de poudres est mis en suspension dans un liquide, pour être déposé à la surface du matériau réfractaire.

20. Procédé selon l'une quelconque des revendications 12 à 18, caractérisé en ce que le mélange de poudres est déposé à la surface du matériau par un procédé choisi parmi la projection supersonique froide, la projection par explosion et la projection plasma.

21. Procédé selon l'une quelconque des revendications 12 à 19 pour l'obtention d'un produit en matériau réfractaire poreux protégé contre l'oxydation, caractérisé en ce que le mélange de poudres est également introduit dans la porosité accessible du matériau.

## Patentansprüche

1. Erzeugnis aus hitzebeständigem Material, das gegen Oxidation geschützt ist durch eine Bedeckung, die mindestens an der Oberfläche des Materials ausgebildet ist und eine mit einer heilenden Phase durchdrungene hitzebeständige Phase aufweist, dadurch gekennzeichnet, daß die hitzebeständige Phase hauptsächlich aus dem hitzebeständigen Silicid T_{(0,4-0,95)}Mo_{(0,6-0,05)}Si₂ ausgebildet ist und die hitzebeständige Phase eine verästelte Mikrostruktur aufweist, die eine Verstärkung bildet, innerhalb derer die heilende Phase verteilt ist, welche aus einem Eutektikum besteht, das hauptsächlich von ungebundenem Silicium, Silicid Ti_{(0,4-0,95)}Mo_{0,6-0,05}Si₂ und mindestens dem Disilicid TiSi₂ gebildet wird.

2. Erzeugnis nach Anspruch 1, dadurch gekennzeichnet, daß die heilende Phase außerdem außer TiSi₂ mindestens ein Disilicid MeSi₂ enthält, in dem Me ein Metall der Gruppen 3 bis 8 des Periodensystems der Elemente ist.

3. Erzeugnis nach Anspruch 1 oder 2, dadurch gekennzeichnet, daß die Bedeckung außerdem einen Belag aus Oberflächenoxid aufweist, der durch Oxidation von in der Bedeckung enthaltenem Silicium erhaltenes Siliciumoxid aufweist.

4. Erzeugnis nach einem der Ansprüche 1 bis 3, dadurch gekennzeichnet, daß Me ein Metall ist, das ausgewählt ist aus Mn, Fe, Co, Ni.

5. Erzeugnis nach einem der Ansprüche 1 bis 4, dadurch gekennzeichnet, daß die Bedeckung außerdem Bor und/oder Yttrium in gebundener Form aufweist.

6. Erzeugnis nach Anspruch 5, dadurch gekennzeichnet, daß die Bedeckung Yttriumdisilicid YSi₂ aufweist.

7. Erzeugnis nach Anspruch 5 oder 6, dadurch gekennzeichnet, daß die Bedeckung Titanborid und/oder Yttriumborid aufweist.

8. Erzeugnis nach einem der Ansprüche 1 bis 7, dadurch gekennzeichnet, daß das hitzebeständige Material ausgewählt ist unter den Legierungen von Niob, von Tantal, von Molybdän, von Wolfram, den intermetallischen Verbindungen und den Oxiddispersionslegierungen.

9. Erzeugnis nach einem der Ansprüche 1 bis 7, dadurch gekennzeichnet, daß das hitzebeständige Material ausgewählt ist unter Aluminium, Titan, Nickel, ihren Legierungen und den intermetallischen Verbindungen und Legierungen des Typs TiAl, Ti₃Al, TiAl₃, NiAl, Ni₃Al, gegenüber denen die Bedeckung eine Schutzwirkung gegen Entflammung hat.

10. Erzeugnis nach einem der Ansprüche 1 bis 7, dadurch gekennzeichnet, daß das hitzebeständige Material ein Kohlenstoff enthaltendes Verbundmaterial ist.

11. Erzeugnis nach einem der Ansprüche 1 bis 7, dadurch gekennzeichnet, daß das hitzebeständige Material ein Verbundmaterial ist, das ausgewählt ist unter den Kohlenstoff-Kohlenstoff-Verbundmaterialien und den Kohlenstoff-SiC-Verbundmaterialien.

12. Verfahren zur Erhaltung eines oxidationsgeschützten Erzeugnisses aus hitzebeständigem Material gemäß einem der Ansprüche 1 bis 11, folgende Schritte aufweisend:
- Herstellen eines Pulver aufweisenden Gemisches, das, in Gewichtsprozent, die folgende Zusammensetzung besitzt:
Ti: 15 % bis 40 %
Mo: 5,0 % bis 30 %
Cr: 0 bis 8 %
Y: 0 % bis 1,5 %
B: 0 % bis 2,5 %
Me: 0 % bis 10 %, wobei Me mindestens ein Metall, ausgenommen Ti, der Gruppen 3 bis 8 des Periodensystems der Elemente ist,
Si: Ergänzung auf 100 %
- Auftragen des Gemisches auf die Oberfläche des zu schützenden Materials; und
- Durchführen mindestens einer thermischen Behandlung in neutraler Atmosphäre bei einer Temperatur, die mindestens gleich dem Schmelzpunkt des die heilende Phase bildenden Eutektikums ist.

13. Verfahren nach Anspruch 12, dadurch gekennzeichnet, daß Me ausgewählt ist unter Mn, Fe, Co, Ni.

14. Verfahren nach Anspruch 12 oder 13, dadurch gekennzeichnet, daß die thermische Behandlung außerdem einen in oxidierender Umgebung ausgeführten Schritt aufweist, um auf der Oberfläche der Bedeckung einen Oxidbelag auszubilden.

15. Verfahren nach Anspruch 14, dadurch gekennzeichnet, daß es außerdem das Auftragen einer Schicht aus hitzebeständigem Oxid auf die Oberfläche des mit der Bedeckung versehenen Materials aufweist.

16. Verfahren nach Anspruch 14, dadurch gekennzeichnet, daß es außerdem das Auftragen einer Schicht aus nichtoxidischer Keramik auf die Oberfläche des mit der Bedeckung bedeckten Materials aufweist.

17. Verfahren nach einem der Ansprüche 12 bis 16, dadurch gekennzeichnet, daß die Zusammensetzung, in Gewichtsprozenten, des Pulvergemisches ist:
Ti: etwa 30 %
Mo: etwa 10 %
Cr: etwa 0,2 %
Y: etwa 0,5 %
B: etwa 2 %
Me: etwa 7 %
Si: Ergänzung auf 100 %.

18. Verfahren nach Anspruch 17, dadurch gekennzeichnet, daß Me Eisen ist.

19. Verfahren nach einem der Ansprüche 12 bis 18, dadurch gekennzeichnet, daß das Pulvergemisch in einer Flüssigkeit in Suspension gebracht wird, um auf die Oberfläche des hitzebeständigen Materials aufgetragen zu werden.

20. Verfahren nach einem der Ansprüche 12 bis 18, dadurch gekennzeichnet, daß das Pulvergemisch durch ein Verfahren, das ausgewählt wird unter Überschallkaltspritzen, Explosionsspritzen und Plasmaspritzen, auf die Oberfläche des Materials aufgetragen wird.

21. Verfahren nach einem der Ansprüche 12 bis 19 zur Erhaltung eines Erzeugnisses aus oxidationsgeschütztem porösen hitzebeständigen Material, dadurch gekennzeichnet, daß das Pulvergemisch gleichermaßen in die zugängliche Porosität des Materials eingeführt wird.

## Claims

1. A product made of refractory material protected against oxidation by a coating formed at least on the surface of the material and comprising a refractory phase interpenetrated by a healing phase, characterised in that the refractory phase is formed mainly by the refractory silicide Ti_{(0.4-0.95)}Mo_{(0.6-0.05)}Si₂, and the refractory phase has a branching microstructure forming an armature within which the healing phase is distributed, which healing phase is constituted by a eutectic formed mainly of unbound silicon, of the silicide Ti_{(0.44-0.95)}Mo_{(0.6-0.05)}Si₂, and of at least the disilicide TiSi₂.

2. A product according to claim 1, characterised in that the healing phase further includes at least one disilicide MeSi₂, in addition to the TiSi₂, where Me is a metal taken from groups 3 to 8 of the periodic classification of the elements.

3. A product according to claim 1 or 2, characterised in that the coating further includes a surface oxide film comprising silica obtained by oxidizing silicon contained in the coating.

4. A product according to any one of claims 1 to 3, characterised in that Me is a metal selected from Mn, Fe, Co, and Ni.

5. A product according to any one of claims 1 to 4, characterised in that the coating further comprises boron and/or yttrium in combined form.

6. A product according to claim 5, characterised in that the coating includes yttrium disilicide YSi₂.

7. A product according to claim 5 or 6, characterised in that the coating includes titanium boride and/or yttrium boride.

8. A product according to any one of claims 1 to 7, characterised in that the refractory material is selected from alloys of niobium, of tantalum, of molybdenum, of tungsten, intermetallic compounds and alloys containing dispersed oxide phases.

9. A product according to any one of claims 1 to 7, characterised in that the refractory material is selected from aluminum, titanium, nickel, alloys thereof, and intermetallic compounds and alloys of the TiAl, Ti₃Al, TiAl₃, NiAl, Ni₃Al type, for which the coating performs an anti-ignition function.

10. A product according to any one of claims 1 to 7, characterised in that the refractory material is a composite material containing carbon.

11. A product according to any one of claims 1 to 7, characterised in that the refractory material is a composite material selected from carbon-carbon and carbon-SiC composite materials.

12. A method of obtaining a product of refractory material that is protected against oxidation, according to any one of claims 1 to 11, the method comprising the steps consisting in :
- preparing a mixture containing powders having the following composition in percentage by weight :
Ti : 15% to 40%
Mo : 5.0% to 30%
Cr : 0 to 8%
Y : 0% to 1.5%
B : 0% to 2.5%
Me: 0% to 10% where Me is at least one metal other than Ti, and taken from groups 3 to 8 of the periodic classification of the elements.
Si : balance needed in order to reach 100%
- depositing the mixture on the surface of the material to be protected ; and
- performing at least one heat treatment under an inert atmosphere at a temperature that is not less than the melting point of the eutectic forming the healing phase.

13. A method according to claim 12, characterised in that Me is selected from Mn, Fe, Co, and Ni.

14. A method according to claim 12 or 13, characterised in that the heat treatment further includes a step performed in an oxidizing medium to form an oxide film on the surface of the coating.

15. A method according to claim 14, characterised in that it further includes depositing a layer of refractory oxide on the surface of the coated material.

16. A method according to claim 14, characterised in that it further includes depositing a layer of non-oxide ceramic on the surface of the coated material.

17. A method according to any one of claims 12 to 16, characterised in that the composition of the mixture of powders, in percentage by weight is :
Ti : about 30%
Mo : about 10%
Cr : about 0.2%
Y: about 0.5%
B : about 2%
Me : about 7%
Si : balance needed in order to reach 100%

18. A method according to claim 17, characterised in that Me is iron.

19. A method according to any one of claims 12 to 18, characterised in that the mixture of powders is put into suspension in a liquid for the purpose of being deposited on the surface of the refractory material.

20. A method according to any one of claims 12 to 18, characterised in that the mixture of powders is deposited on the surface of the material by a method selected from cold supersonic spraying, explosion spraying, and plasma spraying.

21. A method according to any one of claims 12 to 19, for obtaining a product of porous refractory material protected against oxidation, characterised in that the mixture of powders is also inserted into the accessible pores of the material.
